# EUROPÄISCHE PATENTSCHRIFT

(11) **EP 0 622 181 B1**
(45) Veröffentlichungstag und Bekanntmachung des Hinweises auf die Patenterteilung: **01.07.1998**
(21) Anmeldenummer: 94810208.2
(22) Anmeldetag: 13.04.1994
(51) Int. Cl.: B32B 27/06, B65D 35/08

(54) **Verfahren zur Herstellung eines Tubenlaminates**
Preparation process of a tube laminate
Procédé de préparation d'un stratifié en forme de tube

(30) Priorität: 29.04.1993 CH 1298/93
(43) Veröffentlichungstag der Anmeldung: 02.11.1994
(73) Patentinhaber: Alusuisse Technology & Management AG, 8212 Neuhausen am Rheinfall (CH)
(72) Erfinder: Gerber, Manfred, D-78221 Singen (DE)

(56) Entgegenhaltungen:
- EP-A- 0 484 275
- DE-A- 3 300 411
- DE-A- 4 128 820
- DE-A- 4 130 538
- DATABASE WPI Derwent Publications Ltd., London, GB; AN 90-134928 (18) & JP-A-2 081 628 (TOPPAN PRINTING KK) 22. März 1990

## Beschreibung

Vorliegende Erfindung betrifft ein Verfahren zur Herstellung eines Tubenlaminates, enthaltend wenigstens die Schichten
a) eine Polyethylenfolie einer Dicke von 60 bis 200 µm
b) eine Kaschierung
c) eine Trägerfolie einer Dicke von 8 bis 30 µm, beschichtet mit einer keramischen Schicht in einer Dicke von 5 bis 500 nm (Nanometer), gerichtet gegen Schicht d),
d) eine Ionomerschicht in einer Dicke von 20 bis 40 µm,
e) eine Zwischenfolie einer Dicke von 8 bis 30 µm
f) eine Kaschierung
   und
g) eine Polyethylenfolie einer Dicke von 60 bis 200 µm

Es sind beispielsweise aus der Deutschen Offenlegungsschrift DE-OS 41 30 538 kaschierte, tubenförmige Behälter aus einem Vielschichtfolienmaterial bekannt, das ein Substrat, eine darauf abgeschiedene Siliciumoxidschicht, eine Hitzeschutzschicht und eine Extrusionsschicht aus einem Schmelzklebstoff enthält.

Ein derartiger Schichtaufbau hat beispielsweise den Nachteil, dass zu dessen Erzeugung drei Arbeitsgänge erforderlich sind, wobei in allen Arbeitsgängen die Siliciumoxidschicht beispielsweise durch Zug und Biegung belastet wird. Diese Belastungen können zu einer Verminderung der Barrierewirkung der Siliciumoxidschicht führen.

Aufgabe vorliegender Erfindung ist es, diese Nachteile zu vermeiden und ein Tubenlaminat zur Verfügung zu stellen, das auf schonende Weise hergestellt wurde und ein Herstellungsverfahren vorzuschlagen, das die Siliciumoxidschicht nur wenig belastet.

Das erfindungsgemässe Verfahren zur Herstellung der Tubenlaminate wird derart ausgeführt, dass in einem ersten Arbeitsgang die Schicht g), eine Polyethylenfolie einer Dicke von 60 bis 200 µm, durch eine Extrusionskaschierung oder Lackkaschierung unter Bildung einer Kaschierung f) gegen die Schicht e), eine Zwischenfolie einer Dicke von 8 bis 30 µm, kaschiert wird und auf die Schicht e) durch Kalandrierung, Beschichtung oder Lackkaschierung die Schicht d), eine Ionomerschicht in einer Dicke von 20 bis 40 µm aufgebracht und zu einem ersten Teilverbund verarbeitet wird und in einem zweiten Arbeitsgang auf diesen ersten Verbund, auf die Ionomerschicht d), die Schicht c), eine Trägerschicht, die auf der Seite gegen die Schicht d) mit einer keramischen Schicht in einer Dicke von 5 bis 500 nm beschichtet ist, aufbringt und so den ersten Teilverbund zu einem zweiten Teilverbund verarbeitet und in einem dritten Arbeitsgang auf die Schicht c) unter Ausbildung der Schicht b) eine Extrusionskaschierung oder Lackkaschierung aufbringt und auf die Schicht b) die Schicht a), eine Polyethylenfolie einer Dicke von 60 bis 200 µm, aufbringt.

Bevorzugt wird im zweiten Arbeitsgang der erste Teilverbund aus dem ersten Arbeitsgang über die Schicht d), der Ionomerschicht, durch Kalandrierung, vorzugsweise durch Wärmekalandrieren, oder Kaschierung, vorzugsweise mittels Lackanwendung, mit der Schicht c) verbunden, wobei die Schicht c) ohne Zug zuläuft.

Die Schichten a) und g), demnach die Polyethylenfolien, sind in der Regel siegelbar.

Bevorzugt sind Verfahren zur Herstellung von Tubenlaminaten in einer Gesamtdicke von 200 bis 450 µm und insbesondere von 220 µm bis 350 µm.

Zweckmässig sind Verfahren zur Herstellung von Tubenlaminaten enthaltend als Trägerfolie c) eine Polyethylenterephthalat-, eine Polyamid- oder eine Polyolefinfolie einer Dicke von 8 bis 30 µm, die einseitig mit einer keramischen Schicht in einer Dicke von 5 bis 500 nm beschichtet ist.

Bevorzugt sind Verfahren zur Herstellung von Tubenlaminaten, enthaltend als Trägerfolie c) eine Polyethylenterephthalatfolie einer Dicke von 8 bis 30 µm, die einseitig mit einer keramischen Schicht in einer Dicke von 5 bis 500 nm beschichtet ist.

Zweckmässig sind Verfahren zur Herstellung von Tubenlaminaten, enthaltend als Zwischenfolie e) eine Polyethylenterephthalat-, eine Polyamid- oder eine Polyolefinfolie einer Dicke von 8 bis 30 µm.

Zweckmässig sind Verfahren zur Herstellung von Tubenlaminate, enthaltend als Zwischenfolie e) eine Polyethylenterephthalat-, eine Polyamid- oder eine Polyolefinfolie einer Dicke von 8 bis 30 µm, die einseitig mit einer keramischen Schicht in einer Dicke von 5 bis 500 nm beschichtet ist.

Zweckmässig sind auch Verfahren zur Herstellung von Tubenlaminate, enthaltend als Zwischenfolie e) eine Polyethylenterephthalatfolie einer Dicke von 8 bis 30 µm, die einseitig mit einer keramischen Schicht in einer Dicke von 5 bis 500 nm beschichtet ist.

Zweckmässig sind Verfahren zur Herstellung von Tubenlaminate nach vorliegender Erfindung, enthaltend eine Schicht d) aus einer Ionomerschicht in einer Dicke von 30 µm.

Die Schichten a) und g), demnach die Polyethylenfolien, können als Monofilm, jedoch auch als Verbund zweier oder mehrerer Filme vorliegen.

Beispiele von Polyethylenen sind Polyethylen hoher Dichte (HDPE, Dichte grösser als 0,944g/cm³), Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³) und lineares Polyethylen niedriger Dichte (LLDPE, Dichte 0,916-0,925 g/cm³) (-und Copolymere davon, wie z.B. von Polyethylen mit Vinylacetat, Vinylalkohol oder Acrylsäure sowie statistische Copolymere, Block-Copolymere oder Polyethylen-Elastomer-Mischungen.

Die Schicht c), d.h. die Trägerfolie, und die Schicht e), d.h. die Zwischenfolie, stellen z.B. Folien dar, z.B. als Monofilm, jedoch auch als Verbund zweier oder mehrerer Filme.

Die Trägerfolie und die Zwischenfolie können, unabhängig voneinander, Polyester-, Polyamid- oder Polyolefinfolien oder -folienverbunde sein.

Beispiele von Polyolefinen für Polyolefinfolien sind Polyethylene, z.B. Polyethylen hoher Dichte (HDPE, Dichte grösser als 0,944g/cm3), Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³) und lineares Polyethylen niedriger Dichte (LLDPE, Dichte 0,916-0,925 g/cm³), Polypropylene, wie axial oder biaxial orientiertes Polypropylen oder gegossenes (cast) Polypropylen, amorphes oder kristallines Polypropylen oder Gemische davon, ataktisches oder isotaktisches Polypropylen oder Gemische davon, Poly-1-buten, Poly-3-methylbuten, Poly-4-methylpenten und Copolymere davon, wie z.B. von Polyethylen mit Vinylacetat, Vinylalkohol, Acrylsäure, z.B. Ionomerharze, wie Copolymerisate von Ethylen mit etwa 11 % Acrylsäure, Methacrylsäure, Acrylestern, Tetrafluorethylen oder Polypropylen, sowie statistische Copolymere, Block-Copolymere oder Olefinpolymer-Elastomer-Mischungen. Bevorzugt sind Polyethylene hoher Dichte und Polypropylene.

Beispiele von Polyestern für Polyesterfolien sind Polyalkylenterephthalate oder Polyalkylenisophthalate mit Alkylengruppen oder -resten mit 2 bis 10 Kohlenstoffatomen oder Alkylengruppen mit 2 bis 10 C-Atomen, die wenigstens durch ein -0- unterbrochen sind, wie z.B. Polyethylenterephthalat, Polypropylenterephthalat, Polybutylenterephthalat (Polytetramethylenterephthalat), Polydecamethylenterephthalat, Poly-1,4-cyclohexyldimethylolterephthalat oder Polyethylen-2,6-naphthalen-dicarboxylat oder Polyalkylenterephthalat- und Polyalkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe.

Andere Polyester sind Copolymere der Terephthalsäure und einer weiteren Polycarboxylsäure mit wenigstens einem Glykol. Zweckmässig sind dabei die Copolyester der Terephthalsäure, Ethylenglykol und einem zusätzlichen Glykol. Bevorzugt sind glykolmodifizierte Polyester, die der Fachwelt als PETG bekannt sind.

Zweckmässige Polyester sind Polylalkylenterephthalate mit Alkylengruppen oder -resten mit 2 bis 10 Kohlenstoffatomen und Polylalkylenterephthalate mit Alkylengruppen oder -resten mit 2 bis 10 Kohlenstoffatomen, die durch ein oder zwei -0- unterbrochen sind.

Bevorzugte Polyester sind Polylalkylenterephthalate mit Alkylengruppen oder -resten mit 2 bis 4 Kohlenstoffatomen und ganz besonders bevorzugt sind Polyethylenterephthalate. Zu diesen Polyethylenterephthalaten sind auch A-PET, PETP und das genannte PETG oder G-PET zu zählen.

Zu den Polyamiden gehören beispielsweise Polyamid 6, ein Homopolymerisat aus ε-Caprolactam (Polycaprolactam); Polyamid 11, Polyamid 12, ein Homopolymerisat aus ω-Laurinlactam (Polylaurinlactam); Polyamid 6,6, ein Homopolykondensat aus Hexamethylendiamin und Adipinsäure (Polyhexamethylenadipamid); Polyamid 6,10, ein Homopolykondensat aus Hexamethylendiamin und Sebacinsäure (Polyhexamethylensebacamid); Polyamid 6,12, ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamethylenterephthalamid), sowie Gemische davon.

Kaschierungen können beispielsweise als Lackkaschierungen erfolgen und es kann ein Kaschierkleber angewendet werden.

Die Kaschierkleber können lösungsmittelhaltig oder lösungsmittelfrei und auch wasserhaltig sein. Beispiele sind lösungsmittelhaltige, lösungsmittelfreie oder wässrige Acrylatkleber oder Polyurethan-Kleber.

Bevorzugt werden Kaschierkleber auf Polyurethan-Basis.

Der Kaschierkleber kann beispielsweise in Mengen von 1 bis 10 g/m² vorzugsweise in Mengen von 2 bis 8 g/m² und insbesondere in Mengen von 3 bis 6 g/m² angewendet werden.

Zur Unterstützung und Verbesserung der Verbundhaftung der Kaschierkleber zwischen den Kunststoffolien, resp. Kunststoffolien und keramischen Schicht, ist es oft zweckmässig, der Haftvermittlerschicht auf den kleberzugewandten Seiten eine ausreichende Oberflächenspannung zu vermitteln. Die Erhöhung der Oberflächenspannung kann vorzugsweise durch eine Plasma- oder Flammvorbehandlung oder eine Koronabehandlung erfolgen.

Die keramische Schicht dient als Permeabilitätssperre, Sperr- oder Barriereschicht und nach vorliegender Erfindung werden durch Vakuumdünnschichtverdampfung erzeugte keramische Schichten von Oxiden und/oder Nitriden von Metallen und/oder Halbmetallen angewendet.

Die keramische Schicht wird zweckmässig durch ein Vakuumdünnschichtverfahren aufgebracht, wobei physikalische Beschichtungsverfahren (PVD) bzw. chemische Beschichtungsverfahren (CVD) mit Plasmaunterstützung zum Einsatz kommen können. Bevorzugt werden physikalische Beschichtungsverfahren, insbesondere auf der Basis von Elektronenstrahlverdampfen oder Widerstandsheizen oder induktivem Heizen aus Tiegeln. Besonders bevorzugt ist das Elektronenstrahlverdampfen. Die beschriebenen Verfahren können reaktiv und/oder mit Ionenunterstützung gefahren werden.

Die Dicke der keramischen Schicht kann von 5 bis 500 nm (Nanometer) betragen, wobei Schichtdicken von 10 bis 200 nm bevorzugt und von 40 bis 150 nm besonders bevorzugt sind.

Als keramische Schicht können die Oxide und/oder Nitride von Metallen und/oder Halbmetallen, z.B. diejenigen des Siliciums, des Aluminiums oder des Eisens oder Mischungen daraus angewendet werden. Damit umfasst sind auch die Oxinitride der genannten Metalle oder Halbmetalle.

Als keramische Schichten sind die Siliciumoxide oder Aluminiumoxide zweckmässig. Die Siliciumoxide können die allgemeine Formel SiOₓ , wobei x zweckmässig eine Zahl von 1 bis 2 darstellt, bevorzugt von 1,1 bis 1,9 und insbesondere von 1,1 bis 1,7 darstellt, aufweisen. Die Aluminiumoxide können die Formel Al_{y}O_{z}, wobei y/z z.B. eine Zahl von 0,2 bis 1,5 und bevorzugt von 0,65 bis 0,85 darstellt, aufweisen.

Besonders bevorzugt sind Permeabilitätssperrschichten in Form einer 10 bis 500 nm dicken keramischen Schicht eines Siliciumoxides der allgemeinen Formel SiOₓ, wobei x eine Zahl von 1,1 bis 1,7 darstellt oder eines Aluminiumoxides der allgemeinen Formel Al_{y}O_{z}, wobei y/z eine Zahl von 0,2 bis 1,5 darstellt.

Die Permeabilitätssperrschicht in Form einer keramischen Schicht wird auf einer Seite der Trägerfolie c), durch eines der genannten Verfahren aufgebracht. Die Kunststoffolie, z.B. bevorzugt eine PET-Folie, dient demnach als Substrat auf dem die keramische Schicht abgeschieden wird. Die einseitige Beschichtung der Trägerfolie c) ist im Verbund gegen die Schicht d) gerichtet.

Zweckmässig beträgt die Menge an Oxiden und/oder Nitriden von Metallen und/oder Halbmetallen der Permeabilitätssperrschicht 50 bis 400 mg/m² Kunststoffolienverbund, bevorzugt 100 bis 150 mg/m² Kunststoffolienverbund und insbesondere 110 bis 130 mg/m² Kunststoffolienverbund.

Das Tubenlaminat enthält eine Schicht d) aus einem Ionomer. Die Ionomerschicht kann Ionomere oder ionenhaltige Polymere mit typischen Ionomereigenschaften enthalten oder daraus bestehen, d.h. thermoplastische Copolymere von Olefinen mit carboxylhaltigen Monomeren, von denen ein Teil als freie Carboxylgruppen vorliegen und der Rest mit Metallkationen gebunden ist, so dass eine gewisse Quervernetzung erreicht wird.

Als Ionomere können beispielsweise carboxylgruppenhaltige Polyolefine verwendet werden, die durch Copolymerisieren von Olefinmonomeren, wie z.B. Athylen, Propylen oder Buten mit α,β-ungesättigten Carbonsäuren, wie Acrylsäure, Methacrylsäure, Itaconsäure, Fumarsäure, Maleinsäure und Maleinsäureanhydrid, erhalten werden, oder um solche, die durch Pfropfpolymerisieren von Olefinpolymeren mit den α,β-ungesättigten Carbonsäuren erhalten werden. Diese Säuren können teilweise ersetzt werden durch (Meth)Acrylsäureester in einer Gewichtsmenge von beispielsweise bis zu 10 %. Die verwendete Menge der α,β-ungesättigten Carbonsäure liegt beispielsweise im Bereich von 0,01 bis 20 Gew.-Teilen auf 100 Gew.-Teile der Olefinkomponente. Diese carboxylgruppenhaltigen Polyolefine können z.B. einzeln oder in Kombination mit nichtmodifiziertem Polyäthylen oder Polypropylen verwendet werden oder sie können in Mischung mit Metallverbindungen verwendet werden, wobei die Mischung im ursprünglichen Sinn als Ionomere bezeichnet wird. Zu Beispielen für Metallverbindungen gehören Oxide, Hydroxide, Carbonate und Acetate von Natrium, Kalium, Zink, Eisen, Magnesium, Zinn, Aluminium, Kupfer und Nickel. Diese Metallverbindungen können in einer Menge von bis zu 20 Gew.-Teilen auf 100 Gew.-Teile des carboxylgruppenhaltigen Polyolefins zugegeben werden. Das modifizierte Polyolefin kann z.B. in einer Menge von mindestens 0,1 Gew.-%, vorzugsweise von 5 Gew.-% oder mehr, bezogen auf die Menge der nicht-modifizierten Polyolefine, verwendet werden.

Die Kunststoffolien des Tubenlaminates können mit Zusätzen, wie z.B. Stabilisatoren, Weichmachern, Füllstoffen, deckenden oder farbgebenden Pigmenten versehen sein. Das Tubenlaminat nach vorliegender Erfindung bildet einen Kunststoffolienverbund und der Kunststoffolienverbund kann zur Erweiterung dessen Eigenschaften, insbesondere als Tube oder tubenförmiger Behälter mit einer bzw. mehreren Kunststoffschichten, wie z.B. Kunststoffolien und insbesondere siegelbaren Folien, z.B. mittels Lackkaschierung, z.B. mit lösemittelhaltigen oder lösemittelfreien Klebern, bzw. wasserbasierenden Klebstoffsystemen, durch Extrusionskaschierungen oder durch Extrusionsbeschichtung überzogen werden. Siegelbare Folien können beispielsweise LLDPE, LDPE, LMDPE, MDPE, LHDPE (lineares Polyethylen hoher Dichte), HDPE, Polypropylen oder Polyethylenterephthalat enthalten oder daraus bestehen. Siegelbare Folien können eine Dicke von 6 bis 160 µm aufweisen.

Das Tubenlaminat kann auf verschiedene Arten bedruckt (Tief-, Flexo- oder Offsetdruck) werden, wie entweder auf der Aussenseite der ersten Folie oder im Umkehrdruck auf deren Innenseite. Weiterhin kann zum Schutz des Druckbildes auf der Aussenseite ein Schutzlack aufgetragen werden.

Das Tubenlaminat kann z.B. auf marktüblichen Maschinen zu Tuben oder tubenförmigen Behältern verarbeitet werden. Durch Siegeln mittels Heissiegel-, Induktions- bzw. Ultraschallsiegeltechnik können Nähte gelegt werden und die Tuben einends dicht verschlossen resp. Tubenköpfe angebracht werden. Diese Verarbeitungstechniken sind an sich bekannt.

Das Tubenlaminates wird z.B. zur Herstellung von kaschierten, tubenförmigen Behältern und Tuben verwendet.

## Patentansprüche

1. Verfahren zur Herstellung eines Tubenlaminates enthaltend wenigstens die Schichten
a) eine Polyethylenfolien einer Dicke von 60 bis 200 µm
b) eine Kaschierung
c) eine Trägerfolie einer Dicke von 8 bis 30 µm, beschichtet mit einer keramischen Schicht in einer Dicke von 5 bis 500 nm (Nano meter), gerichtet gegen Schicht d),
d) eine Ionomerschicht in einer Dicke von 20 bis 40 µm,
e) eine Zwischenfolie einer Dicke von 8 bis 30 µm
f) eine Kaschierung
und
g) eine Polyethylenfolie einer Dicke von 60 bis 200 µm,
dadurch gekennzeichnet, dass in einem ersten Arbeitsgang die Schicht g), eine Polyethylenfolie einer Dicke von 60 bis 200 µm, durch eine Extrusionskaschierung oder eine Lackkaschierung unter Bildung einer Kaschierung f) gegen die Schicht e), die Zwischenfolie einer Dicke von 8 bis 30 µm, kaschiert wird und auf die Schicht e) durch Kalandrierung, Beschichtung oder Lackkaschierung die Schicht d), eine Ionomerschicht in einer Dicke von 20 bis 40 µm aufgebracht und zu einem ersten Teilverbund verarbeitet wird und in einem zweiten Arbeitsgang auf diesen ersten Verbund, auf die Ionomerschicht d), die Schicht c), eine Trägerschicht, die auf der Seite gegen die Schicht d) mit einer keramischen Schicht in einer Dicke -von 5 bis 500 nm beschichtet ist, aufbringt und so zu einem zweiten Teilverbund verarbeitet und in einem dritten Arbeitsgang auf die Schicht c) unter Ausbildung der Schicht b) eine Extrusionskaschierung oder Lackkaschierung aufbringt und auf die Schicht b) die Schicht a), eine Polyethylenfolie einer Dicke von 60 bis 200 µm, aufbringt.

2. Verfahren nach Anspruch 1, dadurch gekennzeichnet, dass im zweiten Arbeitsgang der erste Teilverbund aus dem ersten Arbeitsgang über die Schicht d), der Ionomerschicht, durch Kalandrierung, vorzugsweise durch Wärmekalandrieren, oder Kaschierung, vorzugsweise mittels Lackanwendung, mit der Schicht c) verbunden wird, wobei die Schicht c) ohne Zug zuläuft.

## Claims

1. Process for the production of a tube laminate comprising at least the following layers:
a) a polyethylene film having a thickness of 60 to 200 µm,
b) a laminate,
c) a supporting film having a thickness of 8 to 30 µm, coated with a ceramic layer having a thickness of 5 to 500 nm (nanometres) on the side directed towards layer d),
d) an ionomer layer having a thickness of 20 to 40 µm,
e) an intermediate film having a thickness of 8 to 30 µm
f) a laminate, and
g) a polyethylene film having a thickness of 60 to 200 µm,
characterised in that, in a first step, the layer g), a polyethylene film having a thickness of 60 to 200 µm, is laminated by extrusion lamination or lacquer lamination with the formation of a laminate f) on the side directed towards the layer e), the intermediate film having a thickness of 8 to 30 µm and the layer d), an ionomer layer having a thickness of 20 to 40 µm, is applied to the layer e) by calendering, coating or lacquer lamination and is processed to form a first partial composite and, in a second step, the layer c), a supporting layer which is coated on the side directed towards the layer d) with a ceramic layer having a thickness of 5 to 500 nm, is applied to this first composite, to the ionomer layer d), and is thus processed to form a second partial composite and, in a third step, an extrusion laminate or lacquer laminate is applied to the layer c) with the formation of the layer b), and the layer a), a polyethylene film having a thickness of 60 to 200 µm, is applied to the layer b).

2. Process according to claim 1, characterised in that, in the second step, the first partial composite from the first step is joined to the layer c) by means of the layer d), the ionomer layer, by calendering, preferably by hot calendering, or lamination, preferably by the application of a lacquer, the layer c) running without tension.

## Revendications

1. Procédé de préparation d'un stratifié pour tubes contenant au moins les couches suivantes:
a) une feuille de polyéthylène d'une épaisseur de 60 à 200 µm
b) un doublage
c) une feuille support d'une épaisseur de 8 à 30 µm, revêtue d'une couche de céramique d'une épaisseur de 5 à 500 nm (nanomètres), dirigée contre la couche d),
d) une couche d'un ionomère d'une épaisseur de 20 à 40 µm,
e) une feuille intermédiaire d'une épaisseur de 8 à 30 µm,
f) un doublage
et
g) une feuille de polyéthylène d'une épaisseur de 60 à 200 µm,
caractérisé en ce que dans une première opération, on double la couche g), une feuille de polyéthylène d'une épaisseur de 60 à 200 µm, par extrusion-couchage ou doublage avec un vernis en formant un doublage f) contre la couche e), la feuille intermédiaire d'une épaisseur de 8 à 30 µm, et on applique sur la couche e) par calandrage, revêtement ou doublage avec du vernis la couche d), qui est une couche d'un ionomère d'une épaisseur de 20 à 40 µm, en formant un premier composite partiel, et dans une deuxième opération, on applique sur ce premier composite, sur la couche d'ionomère d), la couche c), une couche support, qui est revêtue sur le côté appliqué contre la couche d) d'une couche de céramique d'une épaisseur de 5 à 500 nm, et on forme ainsi un second composite partiel, et, dans une troisième opération on réalise sur la couche c) une extrusion-couchage ou un doublage avec du vernis en formant la couche b) et on applique sur la couche b) la couche a) qui est une feuille de polyéthylène d'une épaisseur de 60 à 200 µm.

2. Procédé selon la revendication 1, caractérisé en ce que, dans la deuxième opération, on relie le premier composite partiel issu de la première opération à la couche c) par l'intermédiaire de la couche d), qui est la couche d'ionomère, par calandrage, de préférence par calandrage à chaud, ou par doublage, de préférence à l'aide d'un vernis, en faisant arriver la couche c) sans traction.
